# EUROPÄISCHE PATENTANMELDUNG

(11) **EP 2 067 941 A2**
(43) Veröffentlichungstag der Anmeldung: **10.06.2009**
(21) Anmeldenummer: 08169018.2
(22) Anmeldetag: 13.11.2008
(51) Int. Cl.: F01K 23/10, F02C 3/34

(54) **Kombikraftwerk mit Abgasrückführung und CO2-Abscheidung sowie Verfahren zum Betrieb eines solchen Kombikraftwerks**

(30) Priorität: 06.12.2007 CH 18892007
(71) Anmelder: Alstom Technology Ltd, 5400 Baden (CH)
(72) Erfinder: Vollmer, Michael, 5415, Nussbaumen (CH); Pedretti, Camille, 5413, Birmenstorf (CH); Kjellberg, Tobias, 5200, Brugg (CH)

(57) **Zusammenfassung**

Die Erfindung betrifft ein Kombikraftwerk (10) mit einer Gasturbine (11), einem der Gasturbine (11) nachgeschalteten Abhitzedampferzeuger (16), der Dampf an eine Dampfturbine (19) abgibt, einer Abgasrückführung (28), welche einen Teil der vom Ausgang der Gasturbine (11) durch den Abhitzedampferzeuger (16) strömenden Abgase auf den Eingang der Gasturbine (11) zurückführt, sowie einer CO₂-Abscheidungsanlage (25), welche aus dem nicht zurückgeführten Teil der Abgase das darin enthaltene CO₂ abtrennt und an einem CO₂-Auslass abgibt.

Eine Verringerung des apparativen Aufwandes bzw. eine Flexibilisierung des Betriebs lässt sich dadurch erreichen, dass dem Abhitzedampferzeuger (16) eine Zusatzfeuerung (17) zugeordnet ist, welche durch Verbrennung eines kohlenstoffhaltigen Brennstoffs zusätzliche CO₂-haltige Abgase erzeugt und durch den Abhitzedampferzeuger (16) schickt.

## Beschreibung

### TECHNISCHES GEBIET

Die vorliegende Erfindung bezieht sich auf das Gebiet der Energieerzeugung. Sie betrifft ein Kombikraftwerk gemäss dem Oberbegriff des Anspruchs 1 sowie ein Verfahren zum Betrieb eines solchen Kombikraftwerks.

### STAND DER TECHNIK

Der vergleichsweise niedrige CO₂-Gehalt im Abgas einer Gasturbine ist von Nachteil, wenn es um die Abtrennung von CO₂ aus dem Abgas geht. Es ist aus dem Stand der Technik bekannt (siehe z. B. die Druckschriften EP-A2-1 752 616 oder DE-T5-102 97 365), in Kombikraftwerken mit Abhitzedampferzeuger aus der Gasturbine kommende Abgase nach Durchströmen des Abhitzedampferzeugers auf den Eingang der Gasturbine zurückzuführen, um sowohl den CO₂-Gehalt zu erhöhen und den Massenstrom zu reduzieren, der in den Einrichtungen zur CO₂-Abtrennung verarbeitet werden muss. Am Ausgang des Abhitzedampferzeugers hat das Abgas eine Temperatur von ungefähr 100°C, die dann für die Abtrennung des CO₂ auf 50°C oder weniger reduziert werden muss.

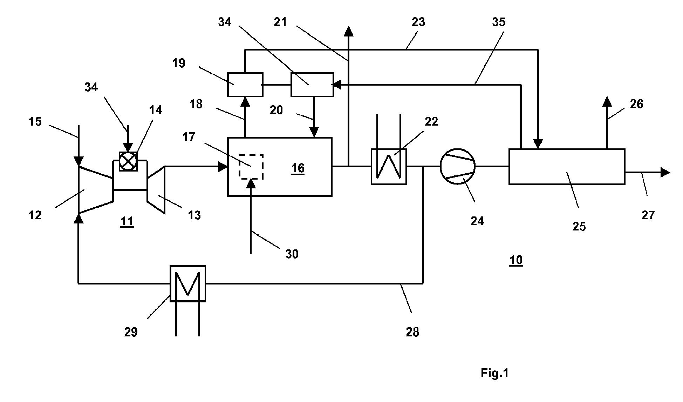

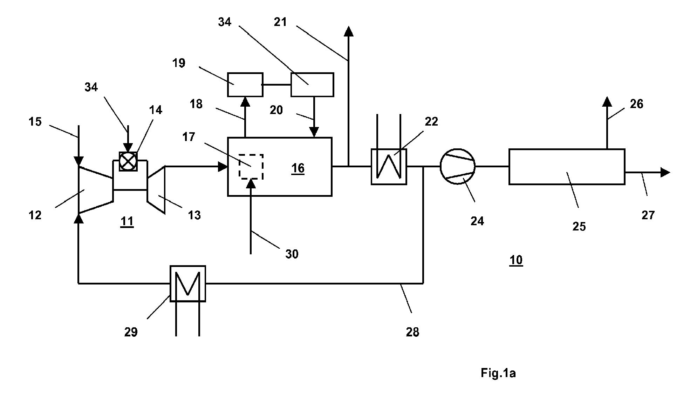

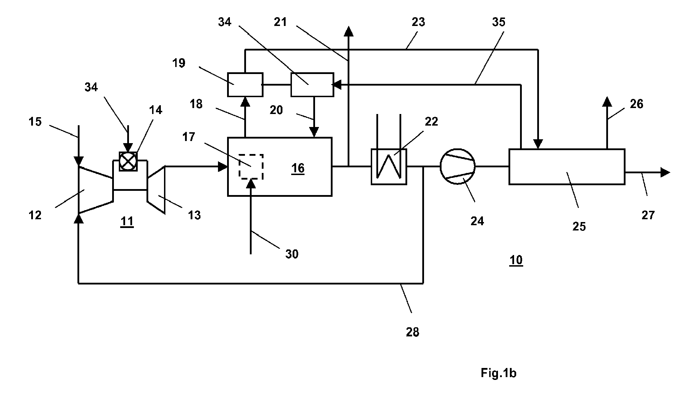

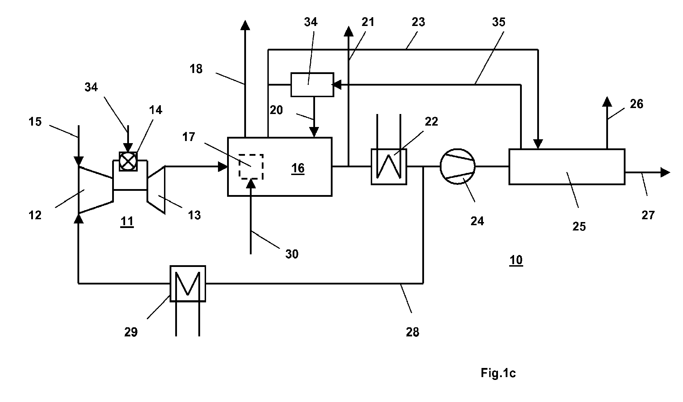

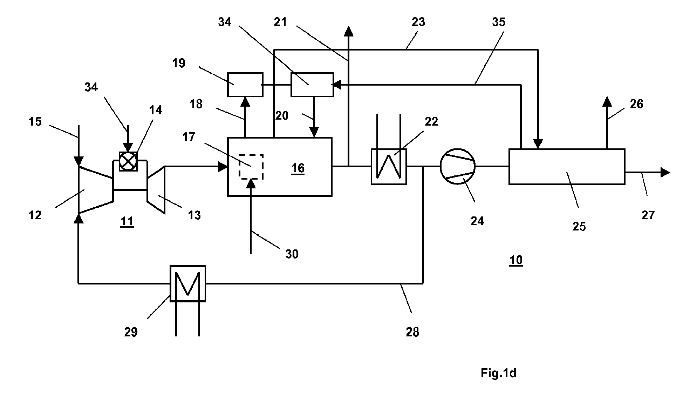

Für ein Kombikraftwerk mit Abgasrückführung entspricht die einfachste sequentielle Anordnung im Prinzip der in Fig. 1 wiedergegebenen Anlage (wobei die im Abhitzedampferzeuger 16 integrierte Zusatzfeuerung 17 mit der Brennstoffzuführung 30 als nicht vorhanden gedacht werden muss). Das Kombikraftwerk 10 der Fig. 1 hat eine Gasturbine 11 mit Verdichter 12, einstufiger oder mehrstufiger Brennkammer 14 mit entsprechender Brennstoffzuführung 34 und Turbine 13 sowie einen nachgeschalteten Abhitzedampferzeuger 16, der über einen Speisewassereinlass zugeführtes Speisewasser in Dampf umwandelt, der über einen oder mehrere Frischdampfauslässe 18 zu einer Dampfturbine 19 strömt. Luft wird vom Verdichter 12 über den Lufteinlass 15 angesaugt und verdichtet. Mittels der verdichteten Luft wird in der Brennkammer 14 der über eine Brennstoffzuführung 34 zugeführte gasförmige und/oder flüssige Brennstoff verbrannt. Die heissen Abgase werden in der Turbine 13 unter Arbeitsleistung entspannt und anschliessend zur Erzeugung von Dampf für den angeschlossenen Wasser/Dampf-Kreislauf 34 durch den Abhitzedampferzeuger 16 geführt: Das aus dem Abhitzedampferzeuger 16 austretende Abgas wird in einem ersten Wärmetauscher 22 abgekühlt und dann in zwei Ströme aufgeteilt: Der eine Strom wird über eine Abgasrückführung 28 zum Eingang der Gasturbine 11 zurückgeführt und dabei in einem zweiten Wärmetauscher 29 weiter heruntergekühlt. Der andere Strom wird mittels eines Gebläses 24 komprimiert und zu einer CO₂-Abscheidungsanlage 25 geführt, wo das CO₂ vom Abgas weitgehend abgetrennt wird. Das abgetrennte CO₂ wird über einen CO₂-Auslass 27 abgegeben, das vom CO₂ weitgehend befreite Abgas über eine Abgasleitung 26. Der für die Abtrennung benötigte Dampf wird an der Dampfturbine 19 oder dem Abhitzedampferzeuger 16 entnommen und über eine Dampfentnahmeleitung 23 der CO₂-Abscheidungsanlage 25 zugeführt. Das anfallende Kondensat der CO₂-Abscheidungsanlage 25 wird über eine Kondensatrückführung 35 dem Wasser/Dampf-Kreislauf 34 der Kombianlage wieder zugeführt. Für CO₂-Abscheidungsanlagen 25 ohne Wärmebedarf kann die Dampfentnahmeleitung 23 ebenso wie die Kondensatrückführung 35 entfallen, wie dies in der Fig. 1a gezeigt ist.

Zwischen dem Abhitzedampferzeuger 16 und dem nachfolgenden Wärmetauscher 22 kann ein Abgasbypass 21 vorgesehen sein, über den in bestimmten Fällen das Abgas direkt an die Atmosphäre abgegeben werden kann.

Nachteilig ist bei dieser Art der Aufkonzentration von CO₂ der mit dem rückgeführten Abgasstrom bei einer Rückführungsrate von etwa 50% verbundene hohe apparative Aufwand an Abgaskanälen und Wärmetauschern sowie die mit der CO₂-Abtrennung verbundene Verringerung der abgegebenen Leistung.

### DARSTELLUNG DER ERFINDUNG

Es ist daher Aufgabe der Erfindung, ein Kombikraftwerk der beschriebene Art so weiterzuentwickeln, dass die Abgasrückführung ohne wesentliche Einbussen bei der CO₂-Konzentration reduziert und zugleich die abgegebene Leistung erhöht werden kann, sowie ein Verfahren zum Betrieb eines solchen Kombikraftwerks anzugeben.

Die Aufgabe wird durch die Gesamtheit der Merkmale der Ansprüche 1, 11 und 13 gelöst. Wesentlich für die Erfindung ist, dass dem Abhitzedampferzeuger eine Zusatzfeuerung zugeordnet ist, welche durch Verbrennung eines kohlenstoffhaltigen Brennstoffs zusätzliche CO₂-haltige Abgase erzeugt und durch den Abhitzedampferzeuger schickt. Die Kombination aus Abgasrezirkulation bzw. Abgasrückführung und Zusatzfeuerung kann dabei auf zwei verschiedene Weisen angewendet werden: Im ersten Fall besteht das Ziel darin, mit der Zusatzfeuerung die abgegebene Leistung zu erhöhen und die Rate des rückgeführten Abgases zu verringern. Die Verringerung kann dabei im Extremfall bis auf Null gehen. Wird dauerhaft auf eine Rückführung des Abgases verzichtet, kann sogar die dafür vorgesehene Abgasrückführung weggelassen werden. Im zweiten Fall wird ein flexibles Betriebskonzept erreicht, das einen Ausgleich zwischen Leistungsabgabe und Effektivität bei der CO₂-Abtrennung ermöglicht.

Eine Ausgestaltung des Kombikraftwerks nach der Erfindung ist dadurch gekennzeichnet, dass die Zusatzfeuerung in den Abhitzedampferzeuger integriert ist. Hierdurch wird ein besonders kompakter Aufbau erreicht.

Eine andere Ausgestaltung der Erfindung zeichnet sich dadurch aus, dass die Abgase nach dem Austritt aus dem Abhitzedampferzeuger und vor der Aufteilung auf die Abgasrückführung und die CO₂-Abscheidungsanlage durch einen ersten Wärmetauscher geschickt werden. Die dadurch erzielte Reduktion der Abgastemperatur stellt eine effektive Abtrennung des CO₂ in der nachfolgenden Anlage sicher.

Vorteilhaft für den sicheren und flexiblen Betrieb der Gesamtanlage ist dabei, wenn zwischen dem Abhitzedampferzeuger und dem ersten Wärmetauscher ein Abgasbypass abzweigt.

Wenn in der Abgasrückführung ein zweiter Wärmetauscher angeordnet ist, kann die Einlasstemperatur der Gasturbine verringert und die Leistungsabgabe erhöht werden.

Gemäss einer anderen Ausgestaltung der Erfindung ist vor der CO₂-Abscheidungsanlage ein Gebläse für die Abgase angeordnet.

Sofern notwendig wird von der Dampfturbine oder dem Abhitzedampferzeuger Dampf über eine Dampfentnahmeleitung zu der CO₂-Abscheidungsanlage geführt.

Ein besonders flexibler Betrieb wird dadurch ermöglicht, dass in der Abgasrückführung erste Mittel zur Einstellung der Rückführungsrate angeordnet sind, die vorzugsweise ein Regelventil umfassen.

Zusätzlich können zweite Mittel zur Steuerung der Zusatzfeuerung vorgesehen sein.

Eine Ausgestaltung des Verfahrens nach Anspruch 11 ist dadurch gekennzeichnet, dass der Anteil der zurückgeführten Abgase auf Null gehalten wird.

Eine Ausgestaltung des Verfahrens nach Anspruch 13 ist dadurch gekennzeichnet, dass der Anteil der zurückgeführten Abgase und/oder die Leistung der Zusatzfeuerung im gegenläufigen Sinn verändert werden. Auf diese Weise kann die CO₂-Konzentration im Abgas konstant gehalten werden.

Eine andere Ausgestaltung zeichnet sich dadurch aus, dass zur zeitweiligen Steigerung der Leistung des Kombikraftwerkes der Anteil der zurückgeführten Abgase verringert und/oder die Leistung der Zusatzfeuerung erhöht wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem stark vereinfachten Anlagenplan ein Kombikraftwerk mit Zusatzfeuerung gemäss einem ersten Ausführungsbeispiel der Erfindung;
- Fig. 1a: in einer zu Fig. 1 vergleichbaren Darstellung ein Kombikraftwerk mit Zusatzfeuerung, wobei eine CO₂-Abscheidungsanlage ohne Dampfbedarf eingesetzt wird;
- Fig. 1b: in einer zu Fig. 1 vergleichbaren Darstellung ein Kombikraftwerk mit Zusatzfeuerung, wobei auf eine separate Kühlung in der Abgasrückführung verzichtet wird;
- Fig. 1c: in einer zu Fig. 1 vergleichbaren Darstellung ein Kombikraftwerk mit Zusatzfeuerung, wobei auf eine Dampfturbine verzichtet und der Dampf beispielsweise einem industriellen Prozess zugeführt wird;
- Fig. 1d: in einer zu Fig. 1 vergleichbaren Darstellung ein Kombikraftwerk mit Zusatzfeuerung, wobei Dampf für die CO₂-Abscheidungsanlage direkt aus dem Abhitzedampferzeuger entnommen wird; und
- Fig. 2: in einer zu Fig. 1 vergleichbaren Darstellung ein Kombikraftwerk mit Zusatzfeuerung gemäss einem zweiten Ausführungsbeispiel der Erfindung.

### WEGE ZUR AUSFÜHRUNG DER ERFINDUNG

In Fig. 1 ist in einem stark vereinfachten Anlagenplan ein Kombikraftwerk 10 mit Zusatzfeuerung gemäss einem ersten Ausführungsbeispiel der Erfindung wiedergegeben. In dem der Gasturbine 11 nachgeschalteten Abhitzedampferzeuger 16 ist hier eine Zusatzfeuerung 17 integriert, die einen über die Brennstoffzuführung 30 zugeführten kohlenstoffhaltigen Brennstoff verbrennt und den durch den Abhitzedampferzeuger 16 geführten Abgasstrom wieder aufheizt und ihm zusätzliches CO₂-haltiges Abgas hinzufügt. Ohne die Zusatzfeuerung 17 tritt das Abgas beispielsweise mit einer Temperatur von 100°C aus dem Abhitzedampferzeuger aus und wird im nachfolgenden Wärmetauscher auf 50°C heruntergekühlt. Die Hälfte des heruntergekühlten Abgasstromes (Rezirkulationsrate 50%) wird dann über die Abgasrückführung 28 zum Eingang der Gasturbine 11 zurückgeführt und dabei im Wärmetauscher 29 noch weiter auf 25°C abgekühlt.

Durch die zugeschaltete Zusatzfeuerung 17 verändert sich diese Situation: Wegen der höheren Abgastemperaturen steht mehr thermische Energie für die Dampferzeugung zur Verfügung. Entsprechend erhöht sich die Leistungsabgabe der Dampfturbine 19. Wegen der zusätzlichen CO₂-Konzentration im Abgas kann die Rezirkulationsrate des Abgases verringert oder im Extremfall sogar ganz auf Null abgesenkt werden. Hierdurch ergeben sich die folgenden Vorteile:
- Die reduzierte oder ganz auf Null abgesenkte Rezirkulationsrate des Abgases erfordert eine geringere Kühlung und weniger apparativen Aufwand (Abgasleitungen und Wärmetauscher).
- Durch die Zusatzfeuerung kann die CO₂-Konzentration erhöht werden, wodurch die Effektivität bei der CO₂-Abtrennung steigt.
- Durch die Zusatzfeuerung kann der interne Leistungsverlust durch die CO₂-Abtrennung kompensiert werden.
- Die reduzierte oder ganz auf Null abgesenkte Rezirkulationsrate des Abgases hat einen höheren O₂-Anteil in der Brennkammer 14 und in der Turbine 13 zur Folge. Dies schwächt die Risiken für schützende Oxidschichten und eine Verbrennung bei niedrigem O₂-Anteil ab.

Beim Ausführungsbeispiel der Fig. 1 sind die Rezirkulationsrate und die Zusatzfeuerung fest vorgegeben und eingestellt. Die Kraftwerksanlage kann daher, insbesondere was die Abgasrückführung anbelangt, entsprechend anders ausgelegt werden.

Weiterhin ist es denkbar, gemäss Fig. 1a in dem Kombikraftwerk 10 der Fig. 1 eine CO₂-Abscheidungsanlage 25 ohne Dampfbedarf einzusetzen. Es entfallen dann die Dampfentnahmeleitung 23 und die Kondensatrückführung 35.

Es kann aber auch gemäss Fig. 1b in der Abgasrückführung 28 des Kombikraftwerks 10 gegenüber Fig. 1 auf eine separate Kühlung 29 verzichtet werden.

Weiterhin ist es denkbar, gemäss Fig 1c in dem Kombikraftwerk 10 der Fig. 1 auf die Dampfturbine 19 zu verzichten und den am Frischdampfauslass 18 entnommenen Frischdampf einem industriellen Prozess oder dgl. zuzuführen.

Auch kann der Dampf für die CO₂-Abscheidungsanlage 25 statt der Dampfturbine 19 gemäss Fig. 1d dem Abhitzedampferzeuger 16 direkt entnommen werden.

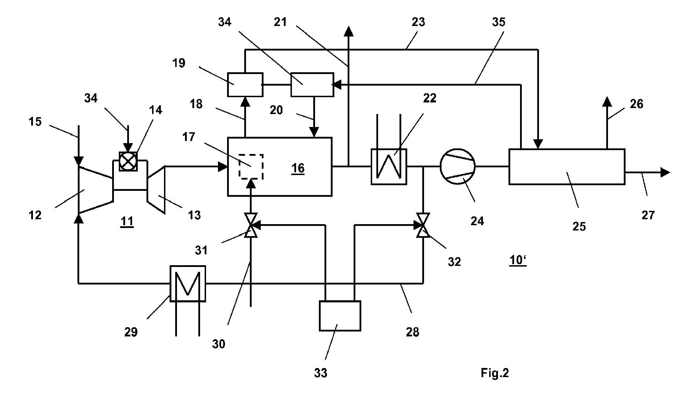

Es ist aber auch denkbar, die Rezirkulationsrate und die Zusatzfeuerung variabel auszugestalten, um den Betrieb des Kombikraftwerks an die jeweils herrschenden Randbedingungen flexibel anpassen zu können. Ein Ausführungsbeispiel eines solchen Kombikraftwerks mit flexibilisierter Abgasrückführung ist in Fig. 2 dargestellt. Beim Kombikraftwerk 10' der Fig. 2 sind gegenüber Fig. 1 zusätzliche Mittel zur Einstellung der Rezirkulationsrate und der Zusatzfeuerung 17 vorgesehen, die beispielhaft als Regelventile 31 und 32 in der Brennstoffzuführung 30 der Zusatzfeuerung 17 und der Abgasrückführung 28 ausgebildet sind. Die Regelventile 31 und 32 sind an eine Steuerung 33 angeschlossen, die je nach Anforderung den rückgeführten Abgasstrom bzw. den Brennstoffstrom zur Zusatzfeuerung 17 einstellt und regelt.

Die Zusatzfeuerung 17 wird hier zur Leistungssteigerung des Kraftwerks in Perioden mit erhöhter Nachfrage an elektrischer Energie durch den Markt eingesetzt. Wird dagegen das Kraftwerk im Normalbetrieb mit hoher Rezirkulationsrate und ohne Zusatzfeuerung betrieben, ermöglich diese eine sehr effiziente Abtrennung des CO₂. Die Rezirkulationsrate wird dabei durch das Regelventil 32 eingestellt.

Wenn (durch teilweises Schliessen des Regelventils 32) die Rezirkulationsrate abgesenkt und die Zusatzfeuerung 17 eingeschaltet wird, erhöht sich die abgegebene Leistung des Kraftwerks. Die Zusatzfeuerung 17 sorgt dabei für eine gleichbleibende CO₂-Konzentration im Abgas. Die Abtrennrate des CO₂ in der CO₂-Abscheidungsanlage 25 wird gleichwohl absinken, weil sich der Abgas-Massenstrom erhöht und mehr CO₂ erzeugt wird. Die Gründe für die Absenkung der CO₂-Abtrennratesollen am Beispiel einer Lösungsmittel-basierten CO₂-Abtrennung erläutert werden:
1. Aufgrund des grösseren Massenstroms hat das Abgas beim Durchströmen der Abtrennsäulen eine höhere Strömungsgeschwindigkeit, so dass sich die Zeit für die Reaktion des CO₂ mit dem Lösungsmittel verkürzt.
2. Da die Menge des im Lösungsmittel absorbierbaren CO₂ begrenzt ist, ist nicht genügend Lösungsmittel vorhanden, um den zusätzlichen CO₂-Anteil zu absorbieren.

Im Falle einer niedrigen Rezirkulationsrate kann die Leistungserhöhung noch verbessert werden. Wenn die gleiche Kühlleistung bei einer ausreichend tiefen Temperatur zur Verfügung steht, kann das rückgeführte Abgas noch weiter abgekühlt werden. Hierdurch wird die Einlasstemperatur der Gasturbine 11 abgesenkt und die abgegebene Leistung erhöht.

Durch den oben beschriebenen flexiblen Betrieb ergeben sich die folgenden Vorteile:
- Das System ist flexibel und ermöglicht einen Ausgleich zwischen der Ausgangsleistung und der Effektivität der CO₂-Abtrennung.
- Eine Leistungssteigerung kann durch eine erhöhte Leistungsabgabe der Dampfturbine erreicht werden, weil mehr Dampf erzeugt wird.
- Eine weitere Leistungssteigerung mit einer erhöhten Leistungsabgabe der Gasturbine kann aufgrund der niedrigeren Einlasstemperaturen erzielt werden.

BEZUGSZEICHENLISTE
- 10,10': Kombikraftwerk
- 11: Gasturbine
- 12: Verdichter
- 13: Turbine
- 14: Brennkammer
- 15: Lufteinlass
- 16: Abhitzedampferzeuger
- 17: Zusatzfeuerung
- 18: Frischdampfauslass
- 19: Dampfturbine
- 20: Speisewassereinlass
- 21: Abgasbypass
- 22,29: Wärmetauscher
- 23: Dampfentnahmeleitung
- 24: Gebläse
- 25: CO₂-Abscheidungsanlage
- 26: Abgasleitung
- 27: CO₂-Auslass
- 28: Abgasrückführung
- 30,34: Brennstoffzuführung
- 31,32: Regelventil
- 33: Steuerung
- 34: Wasser/Dampf-Kreislauf
- 35: Kondensatrückführung

## Patentansprüche

1. Kombikraftwerk (10, 10') mit einer Gasturbine (11), einem der Gasturbine (11) nachgeschalteten Abhitzedampferzeuger (16), der Dampf an eine Dampfturbine (19) abgibt, einer Abgasrückführung (28), welche einen Teil der vom Ausgang der Gasturbine (11) durch den Abhitzedampferzeuger (16) strömenden Abgase auf den Eingang der Gasturbine (11) zurückführt, sowie einer CO₂-Abscheidungsanlage (25), welche aus dem nicht zurückgeführten Teil der Abgase das darin enthaltene CO₂ abtrennt und an einem CO₂-Auslass abgibt, **dadurch gekennzeichnet, dass** dem Abhitzedampferzeuger (16) eine Zusatzfeuerung (17) zugeordnet ist, welche durch Verbrennung eines kohlenstoffhaltigen Brennstoffs zusätzliche CO₂-haltige Abgase erzeugt und durch den Abhitzedampferzeuger (16) schickt.

2. Kombikraftwerk nach Anspruch 1, **dadurch gekennzeichnet, dass** die Zusatzfeuerung (17) in den Abhitzedampferzeuger (16) integriert ist.

3. Kombikraftwerk nach Anspruch 1 oder 2, **dadurch gekennzeichnet, dass** die Abgase nach dem Austritt aus dem Abhitzedampferzeuger (16) und vor der Aufteilung auf die Abgasrückführung (28) und der CO₂-Abscheidungsanlage (25) durch einen ersten Wärmetauscher (22) geschickt werden.

4. Kombikraftwerk nach Anspruch 3, **dadurch gekennzeichnet, dass** zwischen dem Abhitzedampferzeuger (16) und dem ersten Wärmetauscher (22) ein Abgasbypass (21) abzweigt.

5. Kombikraftwerk nach Anspruch 3 oder 4, **dadurch gekennzeichnet, dass** in der Abgasrückführung (28) ein zweiter Wärmetauscher (29) angeordnet ist.

6. Kombikraftwerk nach einem der Ansprüche 1 bis 5, **dadurch gekennzeichnet, dass** vor der CO₂-Abscheidungsanlage (25) ein Gebläse (24) für die Abgase angeordnet ist.

7. Kombikraftwerk nach einem der Ansprüche 1 bis 6, **dadurch gekennzeichnet, dass** von der Dampfturbine (19) oder dem Abhitzedampferzeuger (16) Dampf über eine Dampfentnahmeleitung (23) zur CO₂-Abscheidungsanlage (25) geführt wird.

8. Kombikraftwerk nach einem der Ansprüche 1 bis 7, **dadurch gekennzeichnet, dass** in der Abgasrückführung (28) erste Mittel (32) zur Einstellung der Rückführungsrate angeordnet sind.

9. Kombikraftwerk nach Anspruch 8, **dadurch gekennzeichnet, dass** die ersten Mittel zur Einstellung der Rückführungsrate ein Regelventil (32) umfassen.

10. Kombikraftwerk nach Anspruch 8 oder 9, **dadurch gekennzeichnet, dass** zweite Mittel (31) zur Steuerung der Zusatzfeuerung (17) vorgesehen sind.

11. Verfahren zum Betrieb eines Kombikraftwerks nach einem der Ansprüche 1 bis 10, **dadurch gekennzeichnet, dass** der Anteil der zurückgeführten Abgase und/oder die Leistung der Zusatzfeuerung (17) konstant gehalten werden.

12. Verfahren nach Anspruch 11, **dadurch gekennzeichnet, dass** der Anteil der zurückgeführten Abgase auf Null gehalten wird.

13. Verfahren zum Betrieb eines Kombikraftwerks nach einem der Ansprüche 1 bis 10, **dadurch gekennzeichnet, dass** der Anteil der zurückgeführten Abgase und/oder die Leistung der Zusatzfeuerung (17) verändert werden.

14. Verfahren nach Anspruch 13, **dadurch gekennzeichnet, dass** der Anteil der zurückgeführten Abgase und/oder die Leistung der Zusatzfeuerung (17) im gegenläufigen Sinn verändert werden.

15. Verfahren nach Anspruch 13 oder 14, **dadurch gekennzeichnet, dass** zur zeitweiligen Steigerung der Leistung des Kombikraftwerkes (10') der Anteil der zurückgeführten Abgase verringert und/oder die Leistung der Zusatzfeuerung (17) erhöht wird.
